# EUROPÄISCHE PATENTANMELDUNG

(11) **EP 2 196 660 A1**
(43) Veröffentlichungstag der Anmeldung: **16.06.2010**
(21) Anmeldenummer: 08171297.8
(22) Anmeldetag: 11.12.2008
(51) Int. Cl.: F02M 25/07, F02B 37/007

(54) **Aufladesystem für Abgasrezirkulation**

(71) Anmelder: ABB Turbo Systems AG, 5400 Baden (CH)
(72) Erfinder: Codan, Ennio, 5212 Hausen bei Brugg (CH); Mutter, Alexander, 79733 Göhrwihl (DE); Fusstetter, Klaus, 5408 Ennetbaden (CH); Bernasconi, Simone, 8050 Zürich (CH)
(74) Vertreter: ABB Patent Attorneys

(57) **Zusammenfassung**

Gemäß einem Ausführungsbeispiel der Erfindung ist ein Aufladesystem für einen Verbrennungsmotor angegeben, welches neben einem ersten Turbolader (7,10) einen Rezirkulationspfad (26,28,30,101) mit einem Gerät (29) zur Druckerhöhung aufweist. Es sind erste variable Elemente (23,26) vorgesehen, die dem Zuschalten oder Abschalten des Rezirkulationspfades dienen, Weiterhin sind zweite variable Elemente (14,20) vorgesehen, welche einen optimierten Betrieb des Aufladesystems bei zugeschaltetem und bei abgeschaltetem Pfad ermöglichen. Beispielsweise weist mindestens einer der Turbolader eine Kapazität auf, die ungefähr der AGR-Rate entspricht, wobei die Kapazität durch Ventile abschaltbar ist.

## Beschreibung

### Gebiet der Erfindung

Die Erfindung betrifft die Aufladung von Brennkraftmaschinen. Insbesondere betrifft die Erfindung ein Aufladesystem für einen Verbrennungsmotor, einen Verbrennungsmotor mit einem Aufladesystem, ein Fahrzeug mit einem solchen Verbrennungsmotor, ein Verfahren zum Aufladen eines Verbrennungsmotors, ein Programmelement und ein computerlesbares Medium.

### Technologischer Hintergrund

Die Abgasrezirkulation (AGR) ist eine bekannte Methode zur Reduktion der NOₓ-Emissionen bei Verbrennungsmotoren. Bei aufgeladenen Motoren ist die Hochdruckvariante, d.h. die Entnahme von Abgas vor der Turbine des Turboladers und die Beimischung des Abgases nach dem Verdichter die energetisch günstigste Variante. Sie ist im Bereich der kleinen Motoren, insbesondere für PKW und LKW Anwendung, sehr verbreitet. Der Grund hierfür liegt darin, dass der Abgasdruck vor der Turbine in weiten Bereichen des Motorkennfeldes höher ist, als der Druck der Ladeluft nach dem Turboladerverdichter.

Bei Großmotoren ist dies nicht der Fall, da meistens durch hohe Wirkungsgrade der Aufladung eine positive Druckdifferenz zwischen den Bedingungen vor und nach dem Zylinder erzeugt wird. Dies ist für den Motorbetrieb erwünscht, da dadurch die Spülung des Brennraums möglich wird und die Ladungswechselarbeit reduziert wird. Die positive Druckdifferenz macht die AGR ohne zusätzliche Maßnahmen unmöglich. Das Problem kann dadurch gelöst werden, dass ein Gebläse für die Druckerhöhung des Gases verwendet wird (US 5657630 A1). Diese Lösung erfüllt die Aufgabe, hat aber die Nachteile, dass das Gebläse mit elektrischem oder mechanischem Antrieb sehr groß wird und eine nicht unerhebliche Antriebsleistung verbraucht, was sich negativ auf die Energiebilanz des Gesamtsystems bewirkt.

Aus DE 44 36 732 A1 ist eine andere Lösung bekannt, bei der das Gebläse durch eine Gasturbine angetrieben wird. Die Maschine für die AGR sieht dann wie ein Turbolader aus, obwohl spezielle Komponenten zur Anwendung kommen. Diese Lösung wurde in einem Forschungsprojekt untersucht und hat sich als beste thermodynamische Variante erwiesen (CIMAC Paper: H. Stebler et al. "Reduction of NOx-emissions of a medium-speed d.i. diesel engine using miller system, exhaust gas recirculation, variable nozzle turbo charger and common rail fuel injection-Kopenhagen 1998).

Die Kombination der Hochdruck-AGR mit einer Abgaspumpe, welche als Gebläse oder Turbolader oder als ein äquivalentes System dargestellt werden kann, bedingt eine relativ große Änderung der Spezifikation der Turbolader für die Aufladung des Motors. In Kombination mit hohen AGR-Raten müssen die Verdichter des Aufladesystems weniger Luft komprimieren. Gleichzeitig bekommen die Turbinen weniger Gas. Sowohl die Verdichter als auch die Turbine müssen für eine kleinere Kapazität ausgelegt werden als für den Betrieb ohne AGR.

Dieser Betrieb bleibt aber weiterhin interessant, insbesondere für Schiffsmotoren, welche in unterschiedlichen Gebieten unterschiedlichen Vorschriften bezüglich NOx-Emissionen unterliegen. Wenn das Schiff in Gebieten fährt, wo die Emissionsgrenzen höher sind, ist es besonders günstig, ohne AGR den Motor zu betreiben, da in diesem Betrieb der spezifische Brennstoffverbrauch wesentlich tiefer ausfällt.

Die Auslegung der Aufladung für den Betrieb mit AGR würde aber dies nicht ohne weiteres zulassen. Beim Ausschalten der AGR würde der Ladedruck erheblich steigen, bei Volllast des Motors weit über die zulässigen Drehzahlgrenzen der Turbolader. Der Einsatz von einem Bypassventil für die Turbine (Wastegate) oder das Aufdrehen der Leitschaufeln bei Anwendung von Turbinen mit variabler Geometrie kann den Ladedruck in Grenzen halten, aber der Betriebspunkt im Verdichterkennfeld wandert nach Rechts in Gebiete mit schlechtem Wirkungsgrad. In allen Fällen wäre der Motorbrennstoffverbrauch schlechter als im Betrieb mit AGR.

### Zusammenfassung der Erfindung

Es ist eine Aufgabe der Erfindung, eine verbesserte Aufladung von Verbrennungsmotoren mit variabler NOx-Emission anzugeben.

Es sind ein Aufladesystem für einen Verbrennungsmotor, ein Verbrennungsmotor, ein Fahrzeug, ein Verfahren, ein Programmelement und ein computerlesbares Medium gemäß den Merkmalen der unabhängigen Ansprüche angegeben. Weiterbildungen der Erfindung ergeben sich aus den Unteransprüchen.

Die im Folgenden beschriebenen Ausführungsbeispiele betreffen gleichermaßen das Aufladesystem, den Verbrennungsmotor, das Fahrzeug, das Verfahren, das Programmelement und das computerlesbare Medium. In anderen Worten lassen sich die beispielsweise im Hinblick auf das Aufladesystem genannten Merkmale auch in dem Verbrennungsmotor, dem Fahrzeug, dem Verfahren, dem Programmelement und dem computerlesbaren Medium implementieren, und umgekehrt.

Gemäß einem Ausführungsbeispiel der Erfindung ist ein Aufladesystem für einen Verbrennungsmotor angegeben, bei dem es sich beispielsweise um einen Großmotor für ein Fahrzeug oder für ein Kraftwerk handelt, wobei das Aufladesystem einen ersten Turbolader, einen Rezirkulationspfad und mehrere variable Elemente aufweist. Der Rezirkulationspfad dient der Rezirkulation von Abgas von einem Auslass (bzw. Auslassreceiver) des Verbrennungsmotors zu einem Einlass (bzw. Einlassreceiver) des Verbrennungsmotors. In diesem Rezirkulationspfad befindet sich ein Gerät zur Druckerhöhung des Abgases, beispielsweise in Form eines Gebläses. Zumindest ein erstes variables Element dient dem Zuschalten oder Abschalten des Pfades und zumindest ein zweites variables Element dient der Ermöglichung eines optimierten Betriebes des Aufladesystems bei zugeschaltetem und bei abgeschaltetem Rezirkulationspfad.

In anderen Worten lässt sich der Rezirkulationspfad wahlweise zu- oder wegschalten. Das Aufladesystem ist derart ausgelegt, dass der Betrieb stets optimal abläuft. Hierfür ist das bzw. sind die zweiten variablen Elemente vorgesehen, die die Komponenten des Aufladesystems so einstellen, dass beispielsweise der Brennstoffverbrauch und/oder der Ladedruck und/oder der Wirkungsgrad (und/oder weitere regelbare Größen) wie gewünscht optimiert auf den aktuellen Betriebszustand eingestellt sind.

Gemäß einem weiteren Ausführungsbeispiel der Erfindung weist das Aufladesystem weiterhin mindestens einen zweiten Turbolader auf, der parallel zum ersten Turbolader geschaltet ist, wobei die zweiten variablen Elemente zwei Ventile aufweisen und wobei mindestens einer der Turbolader eine Kapazität aufweist, die ungefähr der AGR-Rate entspricht (also der Abgasrezirkulationsrate), und durch die Ventile abschaltbar ist.

In dieser Ausführungsform umfasst das erfindungsgemäße Aufladesystem für einen Verbrennungsmotor also mindestens zwei parallel arbeitende Turbolader und einen Pfad zur Rezirkulation vom Abgas vom Auslass- zum Einlassreceiver, in dem sich ein Gerät zur Druckerhöhung befindet, wobei mindestens einer der Turbolader eine Kapazität aufweist, die ungefähr der AGR-Rate entspricht, und durch Ventile abschaltbar ist.

Gemäß einem weiteren Ausführungsbeispiel der Erfindung ist der erste Turbolader für einen Betrieb mit AGR ausgelegt, wobei die variablen Elemente im Aufladesystem den Betrieb ohne AGR ermöglichen.

In dieser Ausführungsform umfasst das erfindungsgemäße Aufladesystem für einen Verbrennungsmotor also mindestens einen Turbolader und einen Pfad zur Rezirkulation vom Abgas vom Auslass- zum Einlassreceiver, in dem sich ein Gerät zur Druckerhöhung befindet, wobei der Turbolader für den optimalen Betrieb mit AGR ausgelegt ist und variable Elemente im Aufladesystem den Betrieb ohne AGR ermöglichen.

Gemäß einem weiteren Ausführungsbeispiel der Erfindung ist der erste Turbolader für einen Betrieb ohne AGR ausgelegt, wobei variable Elemente im Aufladesystem den Betrieb mit AGR (also mit Abgasrezirkulationspfad) ermöglichen.

In dieser Ausführungsform umfasst das erfindungsgemäße Aufladesystem für einen Verbrennungsmotor also mindestens einen Turbolader und einen Pfad zur Rezirkulation vom Abgas vom Auslass- zum Einlassreceiver, in dem sich ein Gerät zur Druckerhöhung befindet, wobei der Turbolader für den optimalen Betrieb ohne AGR ausgelegt ist und variable Elemente in Aufladesystem den Betrieb mit AGR ermöglichen.

Gemäß einem weiteren Ausführungsbeispiel der Erfindung sind die Ventilsteuerzeiten des Verbrennungsmotors variabel.

Gemäß einem weiteren Ausführungsbeispiel der Erfindung ist das Aufladesystem derart ausgeführt, dass durch die variablen Ventilsteuerzeiten des Verbrennungsmotors im Betrieb mit AGR ein kleinerer Millereffekt als im Betrieb ohne AGR ermöglicht wird.

Gemäß einem weiteren Ausführungsbeispiel der Erfindung wird durch die variablen Ventilsteuerzeiten des Verbrennungsmotors im Betrieb mit AGR ein höherer Luftdurchsatz (also eine höhere Spülung) als im Betrieb ohne AGR ermöglicht.

Gemäß einem weiteren Ausführungsbeispiel der Erfindung weist das Aufladesystem eine variable Bypassleitung auf, wobei die variable Bypassleitung den Austritt des Turboladerverdichters des ersten Turboladers mit dem Eintritt der Turboladerturbine des ersten Turboladers verbindet.

Auch können weitere variable Bypassleitungen zusätzlich oder alternativ zu dieser ersten variablen Bypassleitung vorgesehen sein.

Gemäß einem weiteren Ausführungsbeispiel der Erfindung weist der Turboladerverdichter des ersten Turboladers einen variablen Diffusor auf.

Gemäß einem weiteren Ausführungsbeispiel der Erfindung weist der Turboladerverdichter des ersten Turboladers eine regelbare Einrichtung zum Erzeugen von Vordrall auf.

Gemäß einem weiteren Ausführungsbeispiel der Erfindung weist die Turboladerturbine des ersten Turboladers eine regelbare Strömungsfläche auf.

Gemäß einem weiteren Ausführungsbeispiel der Erfindung weist das Aufladesystem eine variable Bypassleitung auf, die den Eintritt der Turboladerturbine des ersten Turboladers mit dem Austritt des Systems verbindet.

Gemäß einem weiteren Ausführungsbeispiel der Erfindung ist das Aufladesystem derart ausgeführt, dass die Gasströmung in der Bypassleitung zwischen dem Eintritt der Turboladerturbine und dem Systemaustritt in einer Nutzturbine expandiert wird. Hierfür ist eine entsprechende Nutzturbine zugeschaltet.

Gemäß einem weiteren Ausführungsbeispiel der Erfindung weist der Turbolader bzw. weisen die Turbolader einen mechanischen Anschluss zur Leistungsübertragung auf.

Gemäß einem weiteren Ausführungsbeispiel der Erfindung ist ein Verbrennungsmotor mit einem oben beschriebenen Aufladesystem angegeben. Bei dem Verbrennungsmotor handelt es sich beispielsweise um einen Großmotor für eine Lokomotive, ein Schiff oder ein Kraftwerk.

Gemäß einem weiteren Ausführungsbeispiel der Erfindung ist ein Fahrzeug mit einem solchen Verbrennungsmotor angegeben. Bei dem Fahrzeug handelt es sich beispielsweise um ein Schienenfahrzeug oder ein Wasserfahrzeug.

Gemäß einem weiteren Ausführungsbeispiel der Erfindung ist ein Verfahren zum Aufladen eines Verbrennungsmotors angegeben, bei dem eine Rezirkulation von Abgas durch einen Pfad von einem Auslass des Verbrennungsmotors zu einem Einlass des Verbrennungsmotors erfolgt. In dem Rezirkulationspfad befindet sich ein Gerät zur Druckerhöhung der Abgase. Weiterhin erfolgt ein Zuschalten oder ein Abschalten des Pfades durch ein erstes variables Element. Außerdem wird der Betrieb des Aufladesystems bei zugeschaltetem und bei abgeschaltetem Rezirkulationspfad durch zumindest ein zweites variables Element ermöglicht bzw. optimiert eingestellt.

Gemäß einem weiteren Ausführungsbeispiel der Erfindung ist ein Programmelement angegeben, das, wenn es auf einem Prozessor mit Aufladesystem ausgeführt wird, den Prozessor anleitet, die oben beschriebenen Verfahrensschritte durchzuführen.

Dabei kann das Programmelement z. B. Teil einer Software sein, die auf dem Prozessor des Aufladesystems gespeichert ist. Der Prozessor kann dabei ebenso Gegenstand der Erfindung sein. Weiterhin umfasst dieses Ausführungsbeispiel der Erfindung ein Programmelement, welches schon von Anfang die Erfindung verwendet, sowie auch ein Programmelement, welches durch eine Aktualisierung (Update) ein bestehendes Programm zur Verwendung der Erfindung veranlasst.

Gemäß einem weiteren Ausführungsbeispiel der Erfindung ist ein computerlesbares Medium angegeben, auf dem ein Programmelement gespeichert ist, das, wenn es auf einem Prozessor eines Aufladesystems ausgeführt wird, den Prozessor anleitet, die oben beschriebenen Schritte durchzuführen.

Im Folgenden werden mit Verweis auf die Figuren Ausführungsbeispiele der Erfindung beschrieben.

### Kurze Beschreibung der Figuren

Fig. 1 zeigt einen AGR-Turbolader kombiniert mit Registeraufladung gemäß einem Ausführungsbeispiel der Erfindung.

Fig. 2 zeigt ein AGR-Gebläse kombiniert mit Registeraufladung gemäß einem weiteren Ausführungsbeispiel der Erfindung.

Fig. 3 zeigt einen AGR-Turbolader kombiniert mit verschiedenen Regeloptionen gemäß einem weiteren Ausführungsbeispiel der Erfindung.

Fig. 4 zeigt einen AGR-Turbolader kombiniert mit verschiedenen Regeloptionen und einer Nutzturbine gemäß einem weiteren Ausführungsbeispiel der Erfindung.

Fig. 5 zeigt einen AGR-Turbolader kombiniert mit verschiedenen Regeloptionen und PTI/PTO gemäß einem weiteren Ausführungsbeispiel der Erfindung.

Fig. 6 zeigt zwei Fahrzeuge gemäß Ausführungsbeispielen der Erfindung.

Fig. 7 zeigt ein Kraftwerk mit einem Verbrennungsmotor gemäß einem Ausführungsbeispiel der Erfindung.

Fig. 8 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

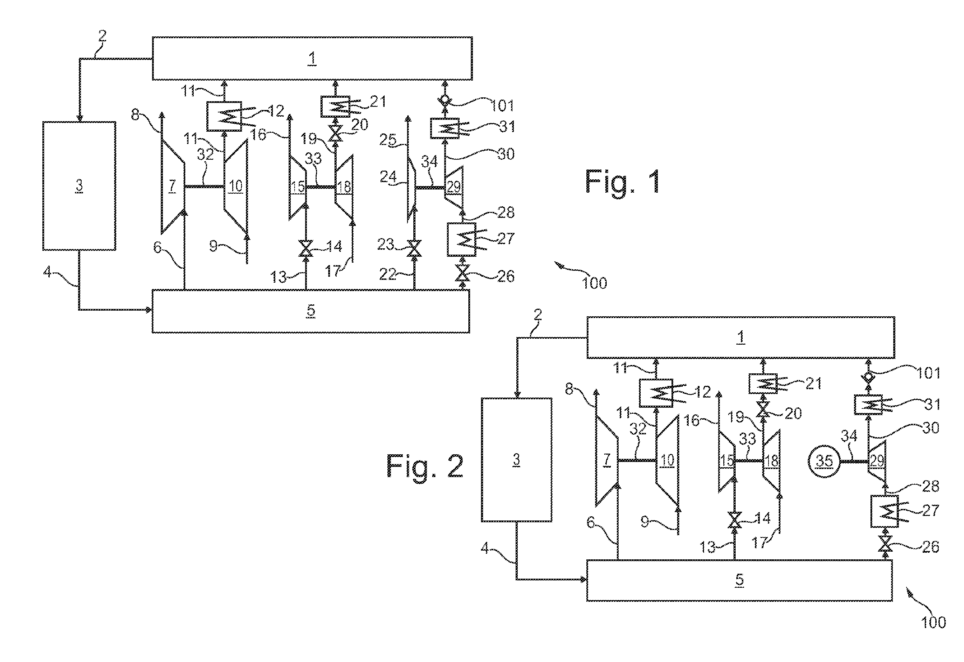

Fig. 1 zeigt ein Aufladesystem 100 für einen Motor 3 mit einem AGR-Turbolader kombiniert mit Registeraufladung gemäß einem Ausführungsbeispiel der Erfindung. Dem Verbrennungsmotor 3 ist ein Luftreceiver 1 vorgeschaltet, der über die Leitung 2 mit dem Verbrennungsmotor 3 verbunden ist. Der Verbrennungsmotor 3 ist über die Leitung 4 mit einem nachgeschalteten Abgasreceiver verbunden. Über die Leitung 6 wird eine Verbindung vom Abgasreceiver 5 zum Turbineneintritt der Gasturbine 7 des ersten Turboladers 7, 10, 32 hergestellt. Der Turbinenaustritt der Gasturbine 7 ist über die Leitung 8 an ein nachgeschaltetes System (z. B. für die Wärmerückgewinnung, die Abgasnachbehandlung oder einen Kamin) oder einfach die Umgebung angeschlossen.

Über die Verbindungswelle 32 ist die Gasturbine 7 mit dem Verdichter 10 des ersten Turboladers verbunden. Der Einlass des Verdichters 10 ist über die Leitung 9 an einen Systemlufteintritt angeschlossen. Der Ausgang des Verdichters 10 ist über die Leitung 11 an einen Luftkühler 12 und dann über die Leitung 11 an den Einlassreceiver 1 angeschlossen.

Über die Verbindungsleitung 13 vom Abgasreceiver 5 und dem Ventil 14 zum Ausschalten der Turbine 15 ist eine Verbindung vom Abgasreceiver zum Turbineneintritt der Turbine 15 hergestellt. Der Turbinenaustritt der Turbine 15 erfolgt über die Leitung 16, die beispielsweise zu einem nachgeschalteten System, wie Wärmerückgewinnung, Abgasnachbehandlung oder Kamin, führt.

Weiterhin ist ein Lufteintritt 17 in das System vorgesehen, der zum Einlass des zweiten Verdichters 18 führt, der über die Verbindungswelle 33 mit der zweiten Turbine 15 verbunden ist. Der Auslass dieses zweiten Verdichters 18 ist über die Verbindungsleitung 19, das Ventil 20 zum Ausschalten des Verdichters und den Luftkühler 21 an den Lufteinlassreceiver 1 angeschlossen.

Über die Verbindungsleitung 22 ist der Abgasreceiver 5 an den Eingang der Gasturbine 24 angeschlossen. In dieser Leitung ist ein Ventil 23 zum Ausschalten der Turbine 24 vorgesehen. Der Auslass der Turbine 24 führt über die Leitung 25 zu einem nachgeschalteten System.

Weiterhin ist über das Ventil 26 zum Ausschalten des AGR-Pfades und dem Modul 27 zum Reinigen und Kühlen des AGR-Gases (z. B. ein Scrubber, ein Kühler oder ein Wärmetauscher) eine Verbindungsleitung 28 zwischen dem Abgasreceiver 5 und dem dritten Verdichter 29 vorgesehen.

Der Verdichter 29 ist über die Welle 34 an die Gasturbine 24 angeschlossen. Die Verbindungsleitung 30 führt vom AGR-Verdichter 29 zum AGR-Kühler 31, der optional vorgesehen ist. Von diesem Kühler 31 führt eine weitere Leitung über ein Rückschlagventil 101 zum Luftreceiver 1.

Das Aufladesystem wird für eine nominelle AGR-Rate von x Ausgelegt (zum Beispiel x = 30%). Die Aufladung wird für eine Kapazität von 1 - x (z. B. 1 - 30% = 70%) in Vergleich mit dem normalen Betrieb ausgelegt. Ein zusätzlicher Turbolader mit Kapazität x wird installiert und nur für den Betrieb ohne AGR zugeschaltet. Es handelt sich um eine Registeraufladung mit Aufteilung 70 - 30%.

Das Gleichzeichen und die angegebenen Zahlen sind lediglich als Beispiele zu verstehen, denn in Abhängigkeit von Wirkungsgradvariationen der einzelnen Turbolader und auch vom Auslegungskonzept können leichte Abweichungen sinnvoll sein.

Bei Motoren mit nur einem Turbolader kann dieser Turbolader durch 2 kleineren (z.B. im Verhältnis etwa 70 - 30) ersetzt werden. Bei Motoren mit zwei Turboladern kann deren Kapazität und eventuell auch deren Größe für die geforderte Aufteilung angepasst werden.

Besonders günstig ist der Fall von Motoren mit 3 Turboladern: die Turbolader können in diesem Fall unverändert bleiben und nur einer davon muss zu- und abschaltbar ausgeführt werden.

Diese Lösung bietet Vorteile sowohl in Betrieb mit AGR als auch in Betrieb ohne AGR:
- Im Betrieb mit AGR kann der Motorbetrieb mit gutem Wirkungsgrad der Aufladung und mit dem zur Erfüllung der Emissionsgrenzen notwendigen AGR-Rate optimiert werden. Dadurch können sehr tiefe Emissionswerte mit dem bestmöglichen Motorwirkungsgrad erreicht werden.
- Im Betrieb ohne AGR kann der Motor mit zugeschaltetem Zusatzturbolader ebenfalls mit gutem Wirkungsgrad der Aufladung und tiefem Brennstoffverbrauch optimiert werden.

Das System kann dann mit vertretbarem Aufwand erlauben, Schiffe weiterhin mit sehr gutem Wirkungsgrad und demzufolge tiefen CO₂ Emissionen in den Gebieten zu betreiben, wo die Emissionsgrenzen dies erlauben. Gleichzeitig kann man die geschützten Gebiete mit stark reduzierten NOₓ-Emissionen und nur leicht verschlechtertem Motorwirkungsgrad befahren.

Um den Motorbetrieb mit und ohne AGR ohne die Registerschaltung zu ermöglichen, ist eine zusätzliche Variabilität im Aufladesystem vorhanden.

Unabhängig von der gewählten Variabilität in den Turboladerkomponenten oder Verbindungen ist eine interessante Möglichkeit, die Ventilsteuerzeiten des Motors variabel zu gestalten. Viele moderne Motoren werden mit dem sogenannten Millerprozess betrieben. Bei 4-Taktmotoren kann dies durch einen Schließen des Einlassventils früher oder später als der Winkel mit optimaler Füllung erfolgen, damit der Zylinder deutlich weniger Ladung bekommt, als die der Dichte im Einlassreceiver und dem Hubvolumen entsprechende Masse. Bei 2-Taktmotoren kann dies durch einen späteren Schließen des Auslassventils produziert werden. Besonders vorteilhaft ist, wenn der Millereffekt im Betrieb mit AGR geringer ausfällt als im Betrieb ohne AGR. Dadurch kann die Verschiebung des Betriebspunktes im Verdichterkennfeld reduziert werden. Die Reduktion der Füllung im Betrieb ohne AGR erlaubt auch, die Erhöhung von Luftverhältnis und maximalem Zylinderdruck durch den höheren Ladedruck zu reduzieren. Insbesondere bei 4-Taktmotoren kann durch die Variation der Ventilüberschneidung die Durchlässigkeit des Motors, d.h. der Zusammenhang zwischen Ladedruck und Durchsatz, noch weiter beeinflusst werden.

Die Strömungsflächen der Turboladerturbinen sind so ausgelegt, dass sie die Antriebsleistung den Verdichtern geben, um den geforderten Ladedruck im Betrieb mit AGR zu produzieren. Im Betrieb ohne AGR bekommen die Turbinen mehr Masse und würden dadurch viel mehr Leistung produzieren. Um diese Leistung zu reduzieren gibt es verschiedene Möglichkeiten:
- Versehen der Turboladerturbine mit variabler Strömungsfläche.
- Verwenden eines Wastegates, d.h. eine Bypassleitung um die Turboladerturbine. Die variable Turbinenfläche erlaubt es, die Turbinenleistung mit den geringsten Wirkungsgradverlusten zu reduzieren. Diese Verluste sind höher, wenn die Turbinenleistung mit dem Wastegate variiert wird.

Die überflüssige Abgasenergie im Betrieb ohne AGR kann in eine Nutzturbine umgesetzt werden, wenn diese Nutzturbine in eine Turbinenbypassleitung integriert wird. Alternativ kann die überflüssige Leistung direkt aus der Turboladerwelle entzogen werden (sogenannter PTO oder power take-out Modus). Ist ein Anschluss zur Turboladerwelle vorhanden, kann er auch als PTI (power take-in Modus) benutzt werden, d.h. externe Leistung kann bei Bedarf eingespeist werden.

Das Problem der Verschiebung der Betriebspunkte im Verdichterkennfeld kann wie folgt ausgedruckt werden:
- Werden die Verdichter für den optimalen Betrieb mit AGR ausgelegt, arbeiten sie mit zu großem Volumenstrom und zu hohem Druck im Betrieb ohne AGR; Dies führt zu schlechteren Wirkungsgraden und ggf. zur Überschreitung der Schluckgrenze oder der Drehzahlgrenze des Verdichters.
- Werden die Verdichter für den optimalen Betrieb ohne AGR ausgelegt, arbeiten sie mit zu kleinem Volumenstrom und zu kleinem Druck im Betrieb mit AGR; Dies kann zu Überschreitung der Pumpgrenze führen.

Eine Bypassleitung um den Motor kann helfen, das Pumpen zu vermeiden. Diese Bypassleitung kann als Verbindung von Austritt des Turboladerverdichters zum Eintritt in die Turboladerturbine dargestellt werden.

Die variable Verdichtergeometrie ist eine weitere Möglichkeit, den optimalen Betriebsbereich des Verdichters zu verschieben. Der Vorteil ist, dass im Vergleich mit den Bypass-Varianten weniger Energie für die Verdichtung aufzuwenden ist. Die Variabilität kann wie folgt realisiert werden:
- Variable (drehbare) Diffusorschaufeln
- Regelbare Einrichtung zur Erzeugung von Drall am Verdichtereintritt.

Von den aufgelisteten Varianten dürfte insbesondere die Registerschaltung vorteilhaft sein. Weitere Kombinationen sind aber durchaus sinnvoll. Die Prioritätensetzung auf Systemwirkungsgrad oder auf Kosten oder Komplexität ist für die Wahl der jeweils geeigneten Lösung entscheidend.

Alternativ zur dritten Gasturbine 24 kann ein elektrischer Motor 35 oder ein anderer Antrieb für das AGR-Gebläse 29 vorgesehen sein (siehe Fig. 2).

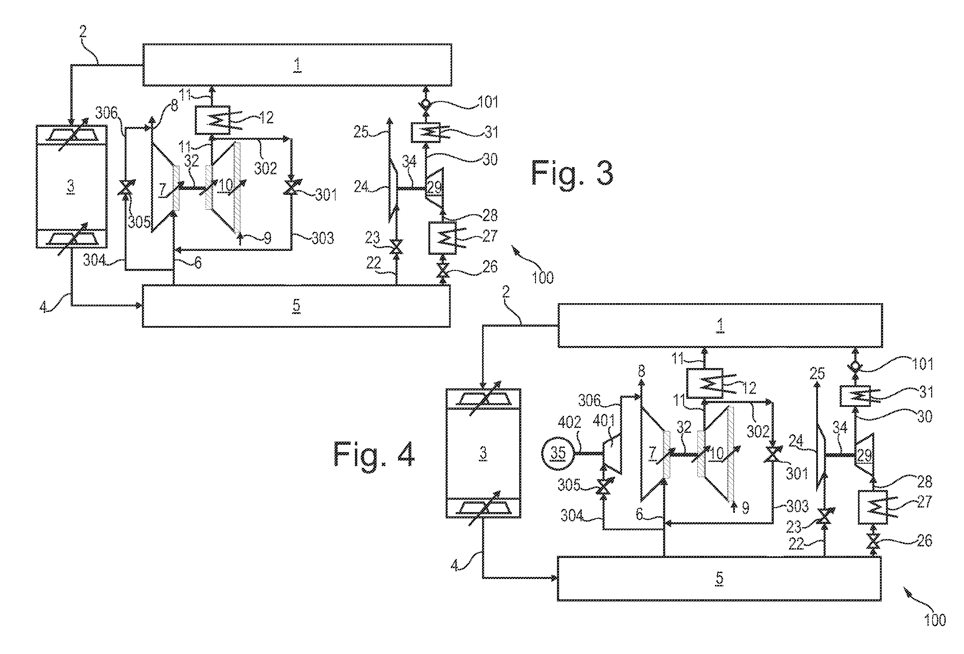

Fig. 3 zeigt ein Aufladesystem 100 mit einem AGR-Turbolader kombiniert mit verschiedenen Regeloptionen. Der Verbrennungsmotor 3 weist steuerbare Ventile auf, so dass die Ventilsteuerzeiten des Verbrennungsmotors 3 variiert werden können.

Weiterhin ist eine Bypassleitung 304, 306 mit einem regel- oder steuerbaren Ventil 305 vorgesehen, die den Einlass der ersten Gasturbine 7 mit ihrem Auslass 8 verbindet. Weiterhin ist eine Verbindungsleitung 302, 303 zwischen dem Verdichteraustritt 11 und dem Turbineneintritt 6 vorgesehen, welche ebenfalls ein steuerbares Ventil 301 aufweist.

Es ist zu beachten, dass die hier und im Folgenden beschriebenen Schaltungen alle Turbolader betreffen, die parallel arbeiten.

Der Turbolader 7, 32, 10 ("mindestens einer") ist der Repräsentant für die Aufladung, die normalerweise aus ein bis drei Turboladern besteht. Diese Turbolader arbeiten parallel, d.h. allfällige variable Elemente müssen so weit wie möglich die gleiche Wirkung auf alle haben.

Der Turbolader 15, 33, 18 ist der Zusatzturbolader für die Registeraufladung. In der Regel ist lediglich ein solcher Turbolader vorgesehen.

Auch ist in der regel nur ein EGR-Turbolader 24, 34, 29 vorgesehen. Bei sehr großen Motoren kann es aber vorkommen, dass die Funktion sinnvollerweise von mehreren kleineren Maschinen übernommen wird.

Fig. 4 zeigt ein Aufladesystem 100 mit einem AGR-Turbolader kombiniert mit verschiedenen Regeloptionen und einer Nutzturbine 401. Die Nutzturbine 401 ist parallel zur ersten Turbine 7 angeordnet und über die Bypassleitung 304 und dem Steuer- oder Regelventil 305 mit der Leitung 6 verbunden. Der Auslass der Nutzturbine 401 ist über die Leitung 306 mit dem Systemaustritt 8 verbunden. Weiterhin ist die Nutzturbine 401 über die Welle 402 an einen Verbraucher 35 angeschlossen.

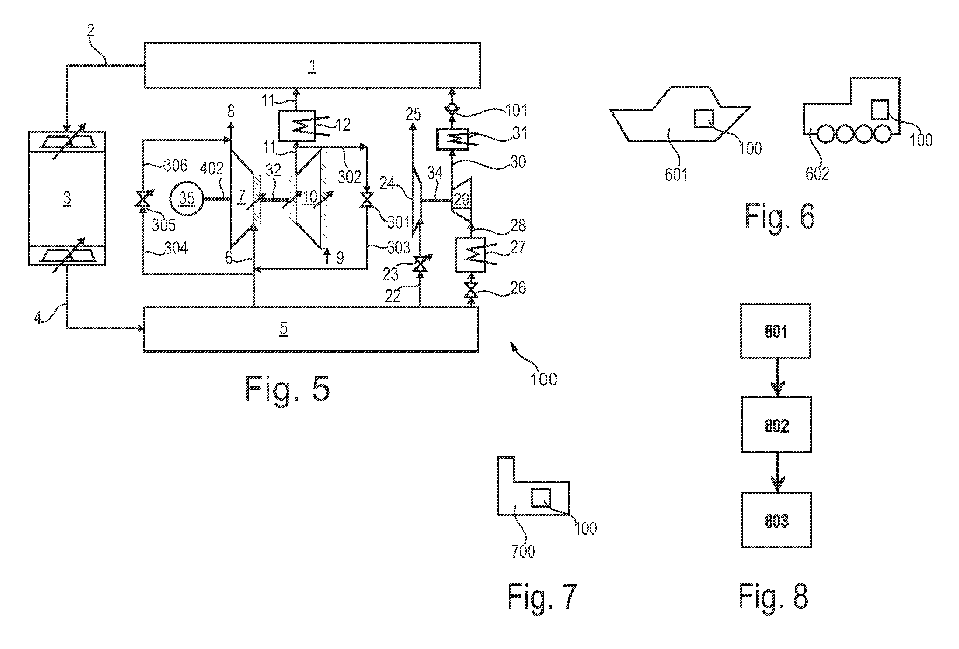

Fig. 5 zeigt ein Aufladesystem 100 mit einem AGR-Turbolader kombiniert mit verschiedenen Regeloptionen und PTI/PTO. Die Turbine 7 des ersten Turboladers weist neben der Welle 32 noch eine zweite Welle 402 auf, an die ein elektrischer Motor/Generator 35 oder ein anderer An-/Abtrieb angeschlossen ist.

Fig. 6 zeigt zwei Fahrzeuge gemäß Ausführungsbeispielen der Erfindung. Bei dem ersten Fahrzeug 601 handelt es sich um ein Schiff und bei dem zweiten Fahrzeug 602 handelt es sich um eine Lokomotive, welche jeweils als Antrieb einen Großmotor mit einem erfindungsgemäßen Aufladesystem 100 aufweisen.

Fig. 7 zeigt ein Kraftwerk 700 mit einem Aufladesystem 100, welches für einen Kraftwerkgroßmotor vorgesehen ist.

Fig. 8 zeigt ein Flussdiagramm eines Verfahrens gemäß einem Ausführungsbeispiel der Erfindung.

In Schritt 801 erfolgt die Rezirkulation von Abgas durch einen Pfad von einem Auslass eines Verbrennungsmotors zu einem Einlass des Verbrennungsmotors, in dem sich ein Gerät zur Druckerhöhung befindet. In Schritt 802 erfolgt ein Zuschalten oder ein Abschalten des Pfades durch ein erstes variables Element. In Schritt 803 erfolgt ein Ermöglichen eines Betriebes des Aufladesystems bei zugeschaltetem und bei abgeschaltetem Pfad durch zumindest ein zweites variables Element.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### BEZUGSZEICHENLISTE

- 1: Luftreceiver
- 2: Verbindung zum Einlasssystem des Motors
- 3: Verbrennungsmotor
- 4: Verbindung zum Abgasreceiver
- 5: Abgasreceiver
- 6, 13, 22: Verbindungen vom Abgasreceiver zu Turbineneintritt.
- 14, 23: Ventil zum Ausschalten der jeweiligen Turbine
- 7, 15, 24: Gasturbine
- 8, 16, 25: Verbindung zum nachgeschalteten System (Wärmerückgewinnung, Abgasnachbehandlung, Kamin,...)
- 9, 17: Lufteintritte in System
- 10, 18, 29: Verdichter
- 11,19,30: Verbindungen von Verdichtereintritt zum Luftreceiver
- 12,21: Luftkühler
- 20: Ventil zum ausschalten des Verdichters
- 26: Ventil zum Ausschalten des AGR Pfades
- 27: Modul zum Reinigen und Kühlen des AGR-Gases (Scrubber, Kühler, Wärmetauscher, ...)
- 28: Verdingung vom Abgasreceiver zum AGR-Verdichter
- 30: Verbindung von AGR-Verdichter zum Luftreceiver
- 31: AGR Kühler (optional)
- 32, 33, 34,:
- 402: Turbolader bzw. Verbindungswelle zwischen Turbine und Verdichter.
- 35: Elektrischer Motor oder Antrieb AGR Gebläse
- 101: Rückschlagventil
- 301, 305: Steuerventile
- 302, 303,:
- 304, 306: Bypassleitungen
- 601: Schiff
- 602: Lokomotive
- 700: Kraftwerk
- 401: Nutzturbine

## Patentansprüche

1. Aufladesystem für einen Verbrennungsmotor (3), das Aufladesystem (100) aufweisend:
einen ersten Turbolader (7, 10, 32);
einen Pfad (26, 28, 30, 101) zur Rezirkulation von Abgas von einem Auslass (5) des Verbrennungsmotors (3) zu einem Einlass (1) des Verbrennungsmotors (3), in dem sich ein Gerät (29) zur Druckerhöhung befindet;
ein erstes variables Element (23, 26) zum Zuschalten oder Abschalten des Pfades (26, 28, 30, 101);
zumindest ein zweites variables Element (14, 20, 301) zur Ermöglichung eines Betriebes des Aufladesystems (100) bei zugeschaltetem und bei abgeschaltetem Pfad (26, 28, 30, 101).

2. Aufladesystem nach Anspruch 1, weiterhin aufweisend:
mindestens einen zweiten Turbolader (15, 18, 33), der parallel zum ersten Turbolader (7, 10, 32) geschaltet ist;
wobei die zweiten variablen Elemente zwei Ventile (14, 20) aufweisen;
wobei mindestens einer der Turbolader eine Kapazität aufweist, die ungefähr der AGR-Rate entspricht, und durch die Ventile abschaltbar ist.

3. Aufladesystem nach Anspruch 1,
wobei der erste Turbolader (7, 10, 32) für einen Betrieb mit AGR ausgelegt ist; und
wobei variable Elemente im Aufladesystem den Betrieb ohne AGR ermöglichen.

4. Aufladesystem nach Anspruch 1,
wobei der erste Turbolader (7, 10, 32) für einen Betrieb ohne AGR ausgelegt ist; und
wobei variable Elemente in Aufladesystem den Betrieb mit AGR ermöglichen.

5. Aufladesystem nach einem der vorhergehenden Ansprüche, wobei die Ventilsteuerzeiten des Verbrennungsmotors (3) variabel sind.

6. Aufladesystem nach Anspruch 5, wobei die Ventilsteuerzeiten des Verbrennungsmotors (3) so variiert werden, dass im Betrieb mit AGR einen kleineren Millereffekt als im Betrieb ohne AGR erzeugt wird.

7. Aufladesystem nach einem der vorhergehenden Ansprüche, weiterhin aufweisend zumindest ein Element ausgewählt aus der Gruppe bestehend aus:
eine erste variable Bypassleitung zur Verbindung eines Austritts des Turboladerverdichters (10) eines Turboladers mit einem Eintritt der Turboladerturbine (7) eines Turboladers;
eine zweite variable Bypassleitung zur Verbindung des Eintritts der Turboladerturbine (7) des Turboladers mit einem Austritt des Systems.

8. Aufladesystem nach einem der vorhergehenden Ansprüche, wobei zumindest ein Turbolader (7, 10, 32) zumindest ein regelbares Element aufweist, ausgewählt aus der Gruppe bestehend aus:
eine Einrichtung zum Erzeugen von Vordrall am Eintritt eines Turboladerverdichters;
ein verstellbarer Diffusor des Turboladerverdichters;
eine variable Strömungsfläche der Turboladerturbine.

9. Aufladesystem nach einem der vorhergehenden Ansprüche, weiterhin aufweisend:
zumindest eine Nutzturbine innerhalb einer variablen Bypassleitung.

10. Aufladesystem nach einem der vorhergehenden Ansprüche,
wobei der erste Turbolader (7, 10, 32) einen mechanischen Anschluss zur Leistungsübertragung aufweist.

11. Verbrennungsmotor (3) mit einem Aufladesystem nach einem der vorhergehenden Ansprüche.

12. Fahrzeug (601, 602) mit einem Verbrennungsmotor (3) nach Anspruch 11.

13. Verfahren zum Aufladen eines Verbrennungsmotors (3), das Verfahren aufweisend die Schritte:
Rezirkulation von Abgas durch einen Pfad von einem Auslass (5) des Verbrennungsmotors (3) zu einem Einlass (1) des Verbrennungsmotors (3), in dem sich ein Gerät (29) zur Druckerhöhung befindet;
Zuschalten oder Abschalten des Pfades (26, 28, 30, 101) durch ein erstes variables Element (23, 26);
Ermöglichen eines Betriebes des Aufladesystems (100) bei zugeschaltetem und bei abgeschaltetem Pfad (26, 28, 30, 101) durch zumindest ein zweites variables Element (14, 20, 301).

14. Programmelement, das, wenn es auf einem Prozessor eines Aufladesystems (100) ausgeführt wird, den Prozessor anleitet, die folgenden Schritte durchzuführen:
Rezirkulation von Abgas durch einen Pfad von einem Auslass (5) des Verbrennungsmotors (3) zu einem Einlass (1) des Verbrennungsmotors (3), in dem sich ein Gerät (29) zur Druckerhöhung befindet;
Zuschalten oder Abschalten des Pfades (26, 28, 30, 101) durch ein erstes variables Element (23, 26);
Ermöglichen eines Betriebes des Aufladesystems (100) bei zugeschaltetem und bei abgeschaltetem Pfad (26, 28, 30, 101) durch zumindest ein zweites variables Element (14, 20, 301).

15. Computerlesbares Medium, auf dem ein Programmelement gespeichert ist, das, wenn es auf einem Prozessor eines Aufladesystems (100) ausgeführt wird, den Prozessor anleitet, die folgenden Schritte durchzuführen:
Rezirkulation von Abgas durch einen Pfad von einem Auslass (5) des Verbrennungsmotors (3) zu einem Einlass (1) des Verbrennungsmotors (3), in dem sich ein Gerät (29) zur Druckerhöhung befindet;
Zuschalten oder Abschalten des Pfades (26, 28, 30, 101) durch ein erstes variables Element (23, 26);
Ermöglichen eines Betriebes des Aufladesystems (100) bei zugeschaltetem und bei abgeschaltetem Pfad (26, 28, 30, 101) durch zumindest ein zweites variables Element (14, 20, 301).
